# EUROPEAN PATENT SPECIFICATION

(11) **EP 2 653 445 B1**
(45) Date of publication and mention of the grant of the patent: **11.10.2017**
(21) Application number: 13164131.8
(22) Date of filing: 17.04.2013
(51) Int. Cl.: C01B 32/184, C01B 32/192, B82Y 30/00, B82Y 40/00

(54) **The method of graphene oxide chemical reduction**
Verfahren zur chemischen Graphenoxidreduktion
Procédé de réduction chimique d'oxyde de graphène

(30) Priority: 19.04.2012 PL 39888612
(43) Date of publication of application: 23.10.2013
(73) Proprietor: Instytut Technologii Materialów Elektronicznych, 01-919 Warszawa (PL)
(72) Inventor: Lipinska, Ludwika, 04-346 Warszawa (PL); Jagiello, Joanna, 08-500 Ryki (PL); Kozinski, Rafal, 00-719 Warszawa (PL); Batijewski, Roman, 01-864 Warszawa (PL); Najdeker, Eugeniusz, 02-798 Warszawa (PL)
(74) Representative: Sielewiesiuk, Jakub

(56) References cited:
- HAI DINH PHAM ET AL: "Synthesis of the chemically converted graphene xerogel with superior electrical conductivity", CHEMICAL COMMUNICATIONS, vol. 47, no. 34, 8 July 2011 (2011-07-08), page 9672, XP055070049, ISSN: 1359-7345, DOI: 10.1039/c1cc13329b
- DATABASE WPI Week 201071 Thomson Scientific, London, GB; AN 2010-K78615 XP002700244, & CN 101 774 574 A (UNIV XIANG TAN) 14 July 2010 (2010-07-14)
- DEZHI CHEN ET AL: "An environment-friendly preparation of reduced graphene oxide nanosheets via amino acid;An environment-friendly preparation of reduced graphene oxide nanosheets via amino acid", NANOTECHNOLOGY, IOP, BRISTOL, GB, vol. 22, no. 32, 14 July 2011 (2011-07-14) , page 325601, XP020208814, ISSN: 0957-4484, DOI: 10.1088/0957-4484/22/32/325601
- XIAOGUANG MEI ET AL: "Ultrasonication-assisted ultrafast reduction of graphene oxide by zinc powder at room temperature", CARBON, ELSEVIER, OXFORD, GB, vol. 49, no. 15, 13 August 2011 (2011-08-13), pages 5389-5397, XP028390324, ISSN: 0008-6223, DOI: 10.1016/J.CARBON.2011.08.019 [retrieved on 2011-08-22]

## Description

The subject of the invention is a method of graphene oxide chemical reduction. More particularly, the invention relates to a graphene oxide reduction method, in particular in the form of suspension of its flakes in a solution, by subjecting it to a suitable chemical substance under certain conditions.

*Graphene oxide,* GO is a product of flake graphite oxidation with strong oxidizers, Hummer's method is commonly used for this purpose. Presently, many companies offer graphene oxide as a commercial product in the form of aqueous suspensions or powder. Graphene oxide is a specific chemical individual, stoichiometry of which may vary within wide limits. Unfortunately, due to the presence of numerous functional groups it is an insulator. From the point of view of industrial application and current research - it is highly desirable in a reduced form - that is, in the form of graphene, because after the reduction its electrical conductivity increases by several orders. For further applications, reduced graphene oxide is required in the form of suspensions, layers, and as a powder.

So far, the attempts to carry out a reduction of graphene oxide included the following methods: chemical, electrochemical, thermal, ultraviolet, with microwaves. Among them, chemical reduction method is considered to be the most economical and allows for easy scale-up. So far, a number of reducing agents have been used, but each of them had some drawbacks.

The first used reducing agent was hydrazine [1, 2], it appeared to be a very good compound, as the products of reduction reaction, in this case, are nitrogen and water. The great disadvantage of hydrazine is its toxicity and the need for performing the reduction over several hours. Therefore, more convenient and environmentally-friendly reducing agents have been sought. The literature contains reports of reduction attempts in alkaline [3, 4], aqueous at high temperature [5], green tea [6], vitamin C [7], sodium hydrosulphite [8], hydriodic acid [9], sugar [10], alcohol [11], urea [12], sodium borohydride [13, 14], amine [15-18], zinc [19, 20] solutions, subsequently number of reducing agents' [21] solutions, aqueous solution of soluble inorganic salt [22] or in the presence of hypophosphorous acid-iodine mixture [23]. However, these reducing agents did not provide an effective recovery of electrical conductivity. The numbers above in the square brackets refer to the following publications of the prior art:
1. J. Mater. Chem. 16 (2006) 155-158, S. Stankovich et al., "Stable aqueous dispersions of graphitic nanoplatelets via the reduction of exfoliated graphite oxide in the presence of poly(sodium 4-styrenesulfonate)"
2. Nature (2006) 442, 282, S. Stankovich et al., "Graphene-based composite materials"
3. Adv. Mater. 20 (2008) 4490-4493, Xiaobin Fan et al., "Deoxygenation of Exfoliated Graphite Oxide under Alkaline Conditions: A Green Route to Graphene Preparation"
4. Angew. Chem. Int. Ed. 50 (2011) 3173-3177, Jonathan P. Rourke et al., "The Real Graphene Oxide Revealed: Stripping the Oxidative Debris from the Graphene-like Sheets"
5. ACS Nano 5 (2011) 1253-1268, Ken-Hsuan Liao et al., "Aqueous only Route toward Graphene from Graphite Oxide"
6. ACS Appl. Mater. Interfaces 3 (2011) 1127-1133, Yan Wang, ZiXing Shi, Jie Yin, "Facile synthesis of Soluble Graphene via a Green Reduction of Graphene Oxide in Tea Solution and Its Biocomposites"
7. J. Phys. Chem. C 114 (2010) 6426-6432, M. J. Fernandez-Merino et al., "Vitamin C Is an Ideal Substitute for Hydrazine in the Reduction of Graphene Oxide Suspensions"
8. Nanotechnology 22 (2011) 045704 (6pp), Tiannan Zhou et al., "A simple and efficient method to prepare graphene by reduction of graphite oxide with sodium hydrosulfite"
9. Carbon 48 (2010) 4466-4474, Songfeng Pei et al., "Direct reduction of graphene oxide films into highly conductive and flexible graphene films by hydrohalic acids"
10.ACS Nano 4 (2010) 2429-2437, Chengzhou Zhu et al., "Reducing Sugar: New Functional Molecules for the Green Synthesis of Graphene Nanosheets"
11.J. Mater. Chem. (2010), Daniel R. Dreyer et al., "Reduction of graphite oxide using alcohols"
12. Carbon 48 (2010) 3463-3470, S. Wakeland et al., "Production of graphene from graphite oxide using urea as expansion-reduction agent "
13. Carbon 49 (2011) 3024-3030, Junfeng Li et al., "A method for the catalytic reduction of graphene oxide at temperatures below 1500 C"
14.Adv. Funct. Mater. 19 (2009) 1987-1992, Hyeon-Jin Shin et al., "Efficient Reduction of Graphite Oxide by Sodium Borohydride and Its Effect on Electrical Conductance"
15. Carbon 49 (2011) 3158-3164, Sen Liu et al., "A method for the production of reduced graphene oxide using benzylamine as a reducing and stabilizing agent and its subsequent decoration with Ag nanoparticles for enzymeless hydrogen peroxide detection"
16. Colloids and Surfaces A: Physicochem. Eng. Aspects 384 (2011) 543-548, Tuan Anh Pham et al., One-step reduction of graphene oxide with L-glutatione"
17. Nanotechnology 22 (2011) 325601 (7pp), Dezhi Chen, Lidong Li, Lin Guo, "An environment-friendly preparation of reduced graphene oxide nanosheets via amino acid"
18.J. Phys. Chem. C. 115 (2011) 11957-11961, Xuejiao Zhou et al., "Reducing Graphene Oxide via Hydroxylamine : A Simple and Efficient Route to Graphene"
19.Journal of Alloys and Compounds 509 (2011) 10086-10091, Tian Lv et al., "enhanced photocatalytic degradation of methylene blue by ZnO-reduced graphene oxide composite synthesized via microwave-assisted reaction"
20. Carbon 49 (2011) 5389-5397, Xiaoguang Mei, Jianyong Ouyang, "Ultrasonication-assisted ultrafast reduction of graphene oxide by zinc power at room temperature"
21. Nano Lett. 8 (2008) 1679-1682, Yongchao Si, Edward T. Samulski, "Synthesis of Water Soluble Graphene"
22. Patent application CN101774574
23.Chemical Communications 34 (2011) 1359-7345, Hai Dinh Pham et al., "Synthesis of the chemically converted graphene xerogel with superior electrical conductivity"

Publication [23] is considered the closest prior art for the present invention.

Polish patent application no. P-318531 discloses a method of removing arsenic compounds and recovering elemental arsenic from solids (after dissolving) or liquids containing arsenic compounds (e.g. from waste and effluents) by adequate chemical reduction of these compounds.

Surprisingly, it was found that the chemical reaction described in the application P-318531 is also suitable for the reduction of graphene oxide, in particular in the form of suspension of its flakes in a solution. Bromate arsenic referred to in the application P-318531 and graphene oxide are completely different chemical compounds. In addition, graphene oxide is a compound of widely variable stoichiometry and - as mentioned above - of strange chemical properties. Finally, application no. P-318531 relates to a different phase system-meaning a true solution, unlike in the present case, in which there is a suspension of graphene oxide flakes, i.e. a solid in the liquid.

A method of graphene oxide chemical reduction according to the invention is characterized in that the graphene oxide is subjected to chemical reduction with hypophosphorous acid and/or hypophosphite ions, in an acidic medium with a pH from 0 to 4.5, wherein sulphur dioxide, sulphurous acid or a salt thereof is used as a reduction catalyst, then the precipitate of reduced graphene oxide is separated from the solution.

Instead of introducing a sulphur dioxide gas into a reduced GO suspension, sulphurous acid or a salt thereof, such as sodium sulphite may be used. In strongly acidic medium, these compounds decompose with the release of sulphur dioxide. Generally speaking, catalytic activity for the reaction that is the subject of the application have sulphur ions (IV). They also have a reducing effect. Therefore, we can also say that there is a synergistic action of the reducing agents (hypophosphorous acid and/or hypophosphite ions and sulphur dioxide).

Preferably, the reduction is carried out in an acidic medium with a pH from 0 to 2, preferably from 0 to 1.

Preferably, the reaction temperature is maintained in the range from 30 °C to 90 °C, preferably from 70 °C to 80 °C.

Preferably, the compounds which produce hypophosphorous acid and/or hypophosphite ions in the aqueous solutions are used as reducing agents, and more preferably alkali metal hypophosphites are used as reducing agents, most preferably sodium and/or potassium and/or ammonium hypophosphite.

Preferably, hypophosphorous acid and/or hypophosphite ions are used in the amount of from a stoichiometric equivalent to twenty times, more preferably from two to four times the excess relative to reduced graphene oxide.

In preferred embodiment of the invention, sulphur dioxide is used as the reduction catalyst, preferably in a molar ratio of sulphur to hypophosphite of 1:10.

Preferably, sulphur dioxide originating from the decomposition of sulphurous acid or a salt thereof is used as the reduction catalyst, which takes place in a strongly acidic medium.

Preferably, graphene oxide is dispersed in an aqueous solution or in an organic solvent or a mixture of water and organic solvents well miscible with water.

In preferred embodiment of the invention, the chemical reduction is assisted by ultrasound.

The invention will now be further described in the preferred embodiments, with reference to the accompanying drawings, in which:
- Fig. 1: shows a characteristic Raman spectrum of reduced graphene oxide,
- fig. 2: shows SEM image of the dried graphene powder at low magnification,
- fig. 3: shows SEM image of the graphene powder at high magnification with a visible structure consisting of single flakes, and
- fig. 4: shows FTIR spectrum of reduced graphene oxide with a small amount of functional groups.

### Preferred embodiments of the invention

### Example I

A reducing mixture was prepared: 0.01 g of ammonium iodide, 9g of hydrated sodium hypophosphite, 1.21 g of sodium sulphite was dissolved in 100 ml of deionized water. Separately, 50 mg of graphene oxide was distributed in 40 ml of deionized water by means of ultrasound. Graphene oxide suspension , GO) was acidified to pH = 1 and heated to 90 °C. Then 12 ml of previously prepared reducing mixture was added. During reduction immediate precipitation of a black precipitate was observed, which indicates a successful spontaneous reduction. The product was filtered, washed with deionized water and dried. The product after compression had a surface resistance of ∼2 400 Ω/square

### Example II

Graphene oxide suspension was prepared, containing 0.15 g of GO. It was acidified with sulphuric acid H₂SO₄ to pH=1. 80ml of the prepared suspension was heated to 95 °C and stirred. Then 9ml of 10% sodium hypophosphite solution was added, and sulphur dioxide gas was let in through the reduced graphene oxide suspension. During reduction black precipitate was observed. Upon completion of the reduction (approximately 1 hour), precipitate was filtered, washed with deionized water and dried. The product after compression had a surface resistance of ∼400 Ω/square.

### Example III

Graphene oxide suspension with a concentration of 10mg/ml was diluted with 70 ml of deionized water. The oxide was dispersed using an ultrasonic probe. 10 ml of 10% sodium hypophosphite solution, acidified with sulphuric acid was added to the suspension. It was sonicated for 1.5 hour until the suspension reached a temperature of 90 °C and after adding 0.1 g of sodium sulphite the process was conducted for 1 more hour. Upon completion of the reduction a black suspension consisting of very small agglomerates was obtained. Upon completion of the reduction, precipitate was filtered, washed with deionized water and dried. The product after compression had a surface resistance as in example II.

### Example IV

50 mg of dry GO was weighed and poured into 60 ml of N-methylpyrrolidone. The oxide was distributed in a solvent using ultrasounds. Gray-brown suspension was obtained. Reducing mixture was added, that is approx. 0.05 g of sodium sulphite and 1 g of sodium hypophosphite, and then the solution was acidified with approx. 2 ml of sulphuric acid. Precipitation of graphene oxide in the form of floccules was observed. The mixture was heated to 95 °C and stirred for 3 hours. Upon completion of the reduction the floccules turned black and fell off. Upon completion of the reduction, precipitate was filtered, washed with deionized water and dried. The product after compression had a surface resistance of ∼1000 Ω/square.

According to the following literature data [22,23], surface resistance of chemically reduced graphene oxide is approximately 43 000 Ω/square.
22. L. Grande et al., Particuology 10(2012) 1-8
23. B. Marinho et al., Powder Technol. (2012), doi: 10.1016/ j.powtec.2012.01.24

Graphene oxide after reduction with the method according to the present invention has a much lower resistivity compared to the value cited in the literature. This reflects a very high quality of reduced graphene oxide obtained by the method according to the invention.

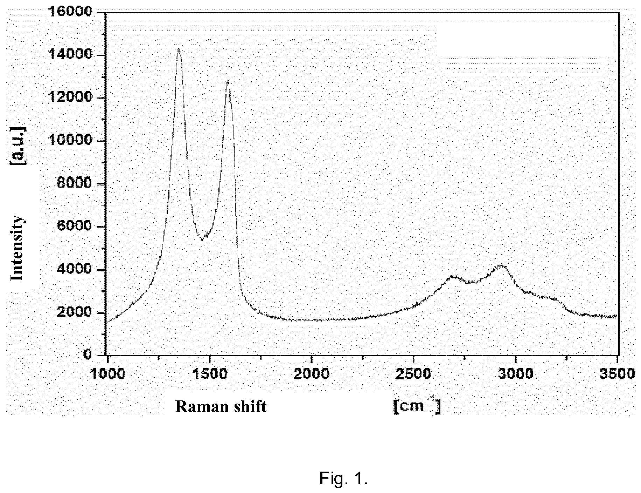

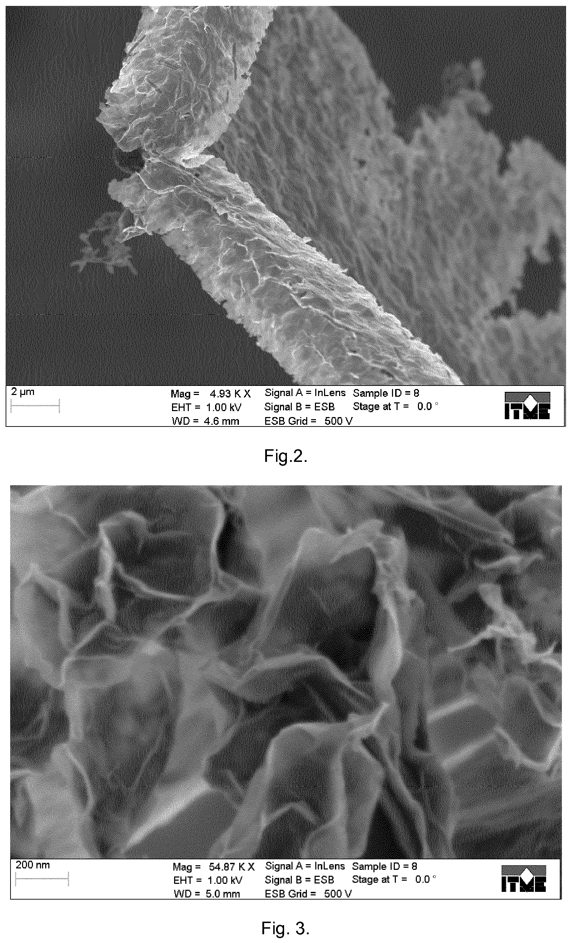

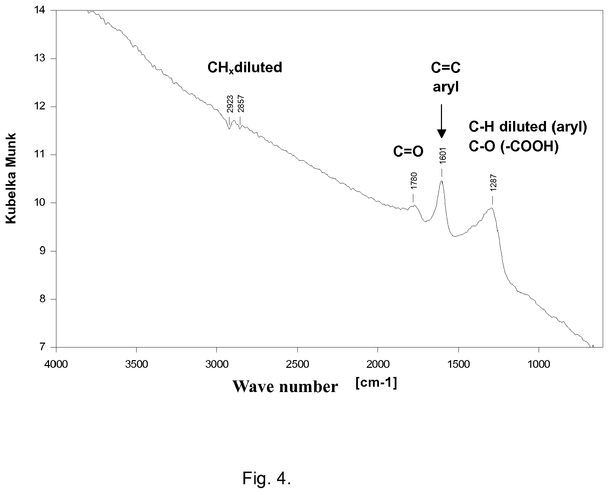

Reduced graphene oxide obtained in the above examples was characterized and the results are illustrated in fig. 1 -4.

## Claims

1. A method of graphene oxide chemical reduction, **characterized in that** the graphene oxide is subjected to chemical reduction with hypophosphorous acid and/or hypophosphite ions, in an acidic medium with a pH from 0 to 4.5, wherein sulphur dioxide, sulphurous acid or a salt thereof is used as a reduction catalyst, then the precipitate of reduced graphene oxide is separated from the solution.

2. The method according to claim 1, **characterized in that** the reduction is carried out in an acidic medium with a pH from 0 to 2, preferably from 0 to 1.

3. The method according to claim 1 or 2, **characterized in that** the reaction temperature is maintained in the range from 30 °C to 90 °C, preferably from 70 °C to 80 °C.

4. The method according to any one of the preceding claims, **characterized in that** the compounds which produce hypophosphorous acid and/or hypophosphite ions in the aqueous solutions are used as reducing agents.

5. The method according to claim 4, **characterized in that** alkali metal hypophosphites, preferably sodium and/or potassium and/or ammonium hypophosphite are used as the reducing agents.

6. The method according to any one of the preceding claims, **characterized in that** hypophosphorous acid and/or hypophosphite ions are used in the amount of from a stoichiometric equivalent to twenty times, more preferably from two to four times the excess relative to reduced graphene oxide.

7. The method according to any one of the preceding claims, **characterized in that** sulphur dioxide is used as the reduction catalyst, in a molar ratio of sulphur to hypophosphite of 1:10.

8. The method according to any one of the preceding claims, **characterized in that** sulphur dioxide originating from the decomposition of sulphurous acid or a salt thereof is used as the reduction catalyst, which takes place in a strongly acidic medium.

9. The method according to any one of the preceding claims, **characterized in that** graphene oxide is dispersed in an aqueous solution or in an organic solvent or a mixture of water and organic solvents well miscible with water.

10. The method according to any one of the preceding claims, **characterized in that** the chemical reduction is assisted by ultrasound.

## Patentansprüche

1. Verfahren zur chemischen Reduktion von Graphenoxid, **dadurch gekennzeichnet, dass** das Graphenoxid einer chemischen Reduktion mit hypophosphorigen Säure und/oder Hypophosphitionen in einem sauren Medium mit einem pH-Wert von 0 bis 4,5 unterworfen wird, wobei Schwefeldioxid, schweflige Säure oder ein Salz davon als Reduktionskatalysator verwendet wird, dann der Niederschlag von reduziertem Graphenoxid von der Lösung abgetrennt wird.

2. Verfahren nach Anspruch 1, **dadurch gekennzeichnet, dass** die Reduktion in einem sauren Medium mit einem pH Wert von 0 bis 2, vorzugsweise von 0 bis 1 durchgeführt wird.

3. Verfahren nach Anspruch 1 oder 2, **dadurch gekennzeichnet, dass** die Reaktionstemperatur im Bereich von 30°C bis 90°C, vorzugsweise von 70°C bis 80°C gehalten wird.

4. Verfahren nach einem der vorhergehenden Ansprüche, **dadurch gekennzeichnet, dass** als Reduktionsmittel die Verbindungen verwendet werden, die in den wässrigen Lösungen hypophosphorige Säure und/oder Hypophosphitionen erzeugen.

5. Verfahren nach Anspruch 4, **dadurch gekennzeichnet, dass** als Reduktionsmittel Alkalimetallhypophosphite, vorzugsweise Natrium- und/oder Kalium- und/oder Ammoniumhypophosphit eingesetzt werden.

6. Verfahren nach einem der vorhergehenden Ansprüche, **dadurch gekennzeichnet, dass** hypophosphorige Säure und/oder Hypophosphitionen in einer Menge von stöchiometrischem Äquivalent von zwanzigmal, bevorzugter von zwei- bis viermal dem Überschuss gegenüber reduziertem Graphenoxid verwendet werden.

7. Verfahren nach einem der vorhergehenden Ansprüche, **dadurch gekennzeichnet, dass** als Reduktionskatalysator Schwefeldioxid in einem Molverhältnis von Schwefel zu Hypophosphit von 1:10 verwendet wird.

8. Verfahren nach einem der vorhergehenden Ansprüchen, **dadurch gekennzeichnet, dass** das aus der Zersetzung von schwefliger Säure oder einem Salz davon entstehende Schwefeldioxid als Reduktionskatalysator verwendet wird, was in einem starken sauren Medium erfolgt.

9. Verfahren nach einem der vorhergehenden Ansprüche, **dadurch gekennzeichnet, dass** Graphenoxid in einer wässrigen Lösung oder in einem organischen Lösungsmittel oder einer Mischung aus Wasser und gut mit Wasser mischbaren organischen Lösungsmittel dispergiert wird.

10. Verfahren nach einem der vorhergehenden Ansprüche, **dadurch gekennzeichnet, dass** die chemische Reduktion durch Ultraschall unterstützt wird.

## Revendications

1. Une méthode de réduction de l'oxyde de graphène, **caractérisée en ce que** l'oxyde de graphène est soumis à une réduction chimique avec des ions d'acide hypophosphoreux et/ou d'hypophosphite, dans un milieu acide avec un pH de 0 à 4,5, dans laquelle le dioxyde de soufre, l'acide sulfureux ou un sel de celui-ci est utilisé comme catalyseur de réduction, puis le précipité de l'oxyde de graphène réduit est séparé de la solution.

2. La méthode selon la revendication 1, **caractérisée en ce que** la réduction est effectuée dans un milieu acide avec un pH de 0 à 2, de préférence de 0 à 1.

3. La méthode selon la revendication 1 ou 2, **caractérisée en ce que** la température de réaction est maintenue dans la plage de 30°C à 90°C, de préférence de 70°C à 80°C.

4. La méthode selon l'une quelconque des revendications précédentes, **caractérisée en ce que** les composés qui produisent des ions d'acide hypophosphoreux et/ou d'hypophosphite dans les solutions aqueuses sont utilisés comme agents réducteurs.

5. La méthode selon la revendication 4, **caractérisée en ce que** hypophosphites de métaux alcalins, de préférence l'hypophosphite de sodium et/ou de potassium et/ou d'ammonium, sont utilisés comme agents réducteurs.

6. La méthode selon l'une quelconque des revendications précédentes, **caractérisée en ce que** les ions d'acide hypophosphoreux et/ou d'hypophosphite sont utilisés en une quantité d'un équivalent stoechiométrique à vingt fois, plus préférablement de deux à quatre fois l'excès par rapport à l'oxyde de graphène réduit.

7. La méthode selon l'une quelconque des revendications précédentes, **caractérisée en ce que** le dioxyde de soufre est utilisé comme catalyseur de réduction, dans un rapport molaire du soufre à l'hypophosphite de 1:10.

8. La méthode selon l'une quelconque des revendications précédentes, **caractérisée en ce que** le dioxyde de soufre provenant de la décomposition de l'acide sulfureux ou d'un sel de celui-ci est utilisé comme catalyseur de réduction, qui a lieu dans un milieu fortement acide.

9. La méthode selon l'une quelconque des revendications précédentes, **caractérisée en ce que** l'oxyde de graphène est dispersé dans une solution aqueuse ou dans un solvant organique ou un mélange d'eau et de solvants organiques bien miscibles à l'eau.

10. La méthode selon l'une quelconque des revendications précédentes, **caractérisée en ce que** la réduction chimique est assistée par ultrasons.
